(19) Europäisches Patentamt
European Patent Office
Office européen des brevets

(11) **EP 1 238 474 B1**

(12) **EUROPÄISCHE PATENTSCHRIFT**

(45) Veröffentlichungstag und Bekanntmachung des Hinweises auf die Patenterteilung:
**24.11.2004 Patentblatt 2004/48**

(51) Int Cl.⁷: **H04B 7/005**, H04B 1/707

(21) Anmeldenummer: **00987023.9**

(86) Internationale Anmeldenummer:
**PCT/DE2000/003759**

(22) Anmeldetag: **25.10.2000**

(87) Internationale Veröffentlichungsnummer:
**WO 2001/041327 (07.06.2001 Gazette 2001/23)**

(54) **VERFAHREN ZUR REGELUNG DER SENDELEISTUNG EINER SENDESTATION UND EMPFANGSSTATION ZUR DURCHFÜHRUNG DES VERFAHRENS**

METHOD FOR REGULATING THE TRANSMISSION POWER OF A TRANSMITTING STATION AND A RECEIVING STATION FOR CARRYING OUT SAID METHOD

PROCEDE DE REGULATION DE LA PUISSANCE D'EMISSION D'UNE STATION D'EMISSION ET STATION DE RECEPTION POUR LA REALISATION DU PROCEDE

(84) Benannte Vertragsstaaten:
**DE FR GB IT SE**

(30) Priorität: **03.12.1999 DE 19958383**

(43) Veröffentlichungstag der Anmeldung:
**11.09.2002 Patentblatt 2002/37**

(73) Patentinhaber: **ROBERT BOSCH GMBH 70442 Stuttgart (DE)**

(72) Erfinder:
• **HANS, Martin**
  **31141 Hildesheim (DE)**
• **KOWALEWSKI, Frank**
  **38228 Salzgitter (DE)**
• **LAUMEN, Josef**
  **31141 Hildesheim (DE)**
• **SCHMIDT, Gunnar**
  **38304 Wolfenbuettel (DE)**
• **BAER, Siegfried**
  **75179 Pforzheim (DE)**
• **BECKMANN, Mark**
  **38102 Braunschweig (DE)**

(56) Entgegenhaltungen:
  **EP-A- 0 863 618          US-A- 5 870 393**

• **ADACHI F ET AL: "COHERENT MULTICODE DS-CDMA MOBILE RADIO ACCESS" IEICE TRANSACTIONS ON COMMUNICATIONS,JP,INSTITUTE OF ELECTRONICS INFORMATION AND COMM. ENG. TOKYO, Bd. E79B, Nr. 9, 1. September 1996 (1996-09-01), Seiten 1316-1324, XP000636071 ISSN: 0916-8516**
• **SEO S ET AL: "SIR-BASED TRANSMIT POWER CONTROL OF REVERSE LINK FOR COHERENT DS-CDMA MOBILE RADIO" IEICE TRANSACTIONS ON COMMUNICATIONS,INSTITUTE OF ELECTRONICS INFORMATION AND COMM. ENG. TOKYO,JP, Bd. E81-B, Nr. 7, 1. Juli 1998 (1998-07-01), Seiten 1508-1516, XP000790185 ISSN: 0916-8516**

EP 1 238 474 B1

## Beschreibung

Stand der Technik

Die Erfindung geht von einem Verfahren zur Regelung der Sendeleistung einer Sendestation und von einer Empfangsstation nach der Gattung der unabhängigen Ansprüche aus.

Aus der US 5,870, 393 ist ein Kommunikationssystem bekannt, in dem die Sendeleistung einer Sendestation in Abhängigkeit einer Schätzung des Signal Interferenz-Verhältnisses in einer Empfangsstation geregelt wird, wobei in dem Kommunikationssystem, unterschiedlichen Kommunikationsteilnehmern zugeordnete Nutzsignale durch orthogonale Codes getrennt werden und wobei aus einem von der Sendestation in der Empfangsstation empfangenen Signal mittels eines der Codes ein einem Kommunikationsteilnehmer zugeordnetes Nutzsignal abgeleitet wird.

Aus der "Technical Specification", 3 GPP RAN 25.214 V 13.1, September 1999 ist für ein Mobilfunksystem eine Leistungsregelung für den Uplinkkanal von einer Mobilstation zu einer Basisstation bekannt. Dabei ist eine Regelschleife vorgesehen, die die Sendeleistung der Mobilstation derart regelt, dass das in der Basisstation über den Uplink-Kanal empfangene Signal/Interferenz-Verhältnis (SIR) auf einem vorgegebenen Zielwert gehalten wird. In der Basisstation wird dabei aus dem von der Mobilstation empfangenen Signal ein Signat/Interferenz-Verhältnis geschätzt. Die Basisstation erzeugt in Abhängigkeit des geschätzten Signal/Interferenz-Verhältnisses sogenannte TPC-Befehle (Transmit Power Control) und überträgt die TPC-Befehle zur Mobilstation. Wenn dabei das geschätzte Signal/Interferenz-Verhältnis größer als das vorgegebene Signal/Interferenz-Verhältnis ist, wird mit dem zu übertragenden TPC-Befehl eine Null übertragen, wohingegen bei einem geschätzten Signal/Interferenz-Verhältnis unterhalb dem vorgegebenen Signal/Interferenz-Verhältnis mit dem TPC-Befehl (Transmit Power Controll) eine Eins übertragen wird. Auf diese Weise kann anhand der in der Mobilstation empfangenen TPC-Befehle die Sendeleistung so eingestellt werden, daß das geschätzte Signal/Interferenz-Verhältnis dem vorgegebenen Signal/Interferenz-Verhältnis nachgeführt wird.

Vorteile der Erfindung

Das erfindungsgemäße Verfahren zur Regelung der Sendeleistung einer Sendestation und die Empfangsstation nach der Gattung der unabhängigen Ansprüche haben demgegenüber den Vorteil, daß in dem Übertragungssystem, insbesondere einem CDMA-Übertragungssystem (Code Division Multiple Access), unterschiedlichen Kommunikationsteilnehmern zugeordnete Nutzsignale durch orthogonale Codes getrennt werden, daß aus einem zumindest von der Sendestation in der Empfangsstation empfangenen Signal mittels eines der Codes ein einem Kommunikationsteilnehmer zugeordnetes Nutzsignal abgeleitet und als Referenzsignal mit dem empfangenen Signal verglichen wird, um das Signal/Interferenz-Verhältnis zu schätzen. Auf diese Weise ist es möglich, das Signal/Interferenz-Verhältnis allein mit Hilfe des empfangenen Signals zu schätzen, ohne daß bekannte Pilotsequenzen zur Empfangsstation übertragen und dort mit entsprechenden Referenzpilotsequenzen verglichen werden müssen. Durch Verzicht auf die Übertragung solcher Pilotsequenzen kann die Datenrate für die Signalübertragung von der Sendestation zur Empfangsstation erhöht werden.

Durch die in den Unteransprüchen aufgeführten Maßnahmen sind vorteilhafte Weiterbildungen und Verbesserungen des Verfahrens zur Regelung der Sendeleistung einer Sendestation und der Empfangsstation gemäß den unabhängigen Ansprüchen möglich.

Besonders vorteilhaft ist es dabei, daß das empfangene Signal mit dem ausgewählten Code entspreizt wird, daß das so entspreizte Signal einer Datendetektion unterzogen wird und daß das so detektierte Signal mit dem ausgewählten Code erneut gespreizt wird, um das Referenzsignal zu bilden. Auf diese Weise läßt sich aus einem empfangenen Signal, das mehrere Nutzsignale unterschiedlicher und zum Sendezeitpunkt untereinander orthogonaler Codierung umfaßt, ein Nutzsignal mit reduzierter Interferenz ableiten und als Referenzsignal für den Vergleich mit dem empfangenen Signal zur Verfügung stellen.

Ein weiterer Vorteil besteht darin, daß das zumindest von der Sendestation an die Empfangsstation zu übertragende Signal in der Sendestation, insbesondere mittels eines Joint-Predistortion-Verfahrens, vorverzerrt wird. Auf diese Weise kann verhindert werden, daß das in der Empfangsstation empfangene Signal durch Intersymbolinterferenzen (ISI) aufgrund von Mehrwegeübertragung des zu übertragenden Signals beeinträchtigt ist, so daß in der Empfangsstation eine im Vergleich zu beispielsweise einem Joint-Detection-Verfahren vergleichsweise einfache Entzerrung möglich ist, oder auf eine Entzerrung völlig verzichtet werden kann.

Zeichnung

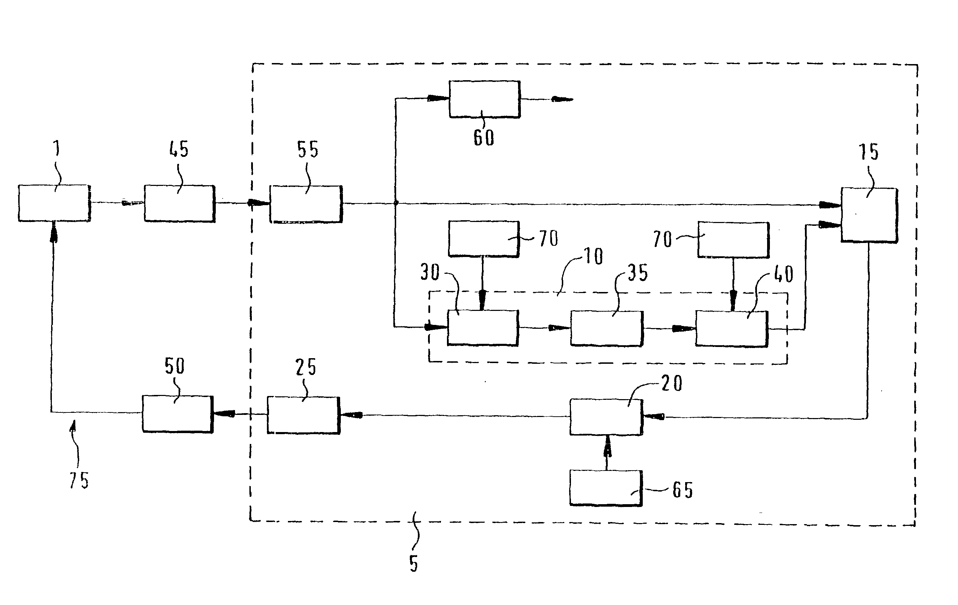

Ein Ausführungsbeispiel der Erfindung ist in der Zeichnung dargestellt und in der nachfolgenden Beschreibung näher erläutert. Es zeigt die einzige Figur ein Blockschaltbild einer erfindungsgemäßen Empfangsstation zur Realisierung des erfindungsgemäßen Verfahrens.

Beschreibung des Ausführungsbeispiels

In der Figur kennzeichnet 1 eine Sendestation und 5 eine Empfangsstation in einem Übertragungssystem. Bei dem Übertragungssystem kann es sich beispielsweise um ein Mobilfunksystem oder um ein Breitbandübertragungssystem unter Verwendung von Kabelverbindungen handeln. Dabei sendet die Sendestation 1 über einen ersten Übertragungskanal 45 Signale an die Empfangsstation 5, die wiederum über einen zweiten Übertragungskanal 50 Signale an die Sendestation 1 sendet. Im folgenden soll beispielhaft das Übertragungssystem als Mobilfunksystem ausgebildet sein. Bei der Sendestation 1 kann es sich dann beispielsweise um eine Basisstation handeln, die im Mobilfunksystem eine Funkzelle aufspannt, in der sich die Empfangsstation 5 befindet. Die Empfangsstation 5 kann dann als mobiles Endgerät, beispielsweise als Mobiltelefon, ausgebildet sein. Das Mobilfunksystem kann nach dem GSM-Standard (Global System for Mobile Communications) oder nach dem UMTS-Standard (Universal Mobile Telecommunication System) oder dergleichen ausgebildet sein.

Der erste Übertragungskanal 45 stellt dann einen sogenannten Downlink-Kanal von der als Basisstation ausgebildeten Sendestation 1 zur als Mobiltelefon ausgebildeten Empfangsstation 5 dar. Der zweite Übertragungskanal 50 hingegegen stellt einen sogenannten Uplink-Kanal vom Mobiltelefon 5 zur Basisstation 1 dar.

Es kann umgekehrt auch vorgesehen sein, daß die Empfangsstation 5 als Basisstation und die Sendestation 1 als Mobiltelefon ausgebildet ist. In diesem Fall wäre dann der erste Übertragungskanal 45 der Uplink-Kanal und der zweite Übertragungskanal 50 der Downlink-Kanal.

Im folgenden soll beispielhaft der Fall beschrieben werden, daß das Übertragungssystem ein Mobilfunksystem ist, bei dem die Sendestation 1 als Basisstation und die Empfangsstation 5 als Mobiltelefon ausgebildet sind. Dabei soll angenommen werden, daß das Mobiltelefon 5 eine von mehreren in der von der Basisstation 1 aufgespannten Funkzelle angeordneten Empfangsstationen bzw. Mobiltelefonen darstellt. Jedes dieser Mobiltelefone stellt dabei einen Kommunikationsteilnehmer dar. Die von der Basisstation 1 an die einzelnen Kommunikationsteilnehmer ausgesandten Nutzsignale werden gemultiplext an die einzelnen Kommunikationsteilnehmer übertragen. Dazu werden die einzelnen Nutzsignale vor ihrer Übertragung von der Basisstation 1 zu den einzelnen Mobiltelefonen durch Spreizcodes codiert. Jedem Kommunikationsteilnehmer ist dabei ein Spreizcode zugeordnet, so daß die von der Basisstation 1 an den jeweiligen Kommunikationsteilnehmer zu übertragenden Nutzsignale mit dem diesem Kommunikationsteilnehmer zugeordneten Spreizcode codiert sind. Durch die unterschiedlichen Spreizcodes können die den einzelnen Kommunikationsteilnehmern zugeordneten Signale zeitlich und spektral überlagert zu den einzelnen Kommunikationsteilnehmern auf einem gemeinsamen Übertragungskanal übertragen und bei Empfang wieder voneinander getrennt werden, wenn beim empfangenen Kommunikationsteilnehmer der diesem Kommunikationsteilnehmer zugeordnete Spreizcode bekannt ist. Ein solches Übertragungsverfahren, bei dem alle Kommunikationsteilnehmer gleichzeitig auf den Übertragungskanal zugreifen können, stellt das sogenannte CDMA-Übertragungsverfahren (Code Division Multiple Access) dar. Dieses soll beispielhaft dem hier beschriebenen Mobilfunksystem zugrundegelegt werden.

Durch die beschriebene zeitliche und spektrale Überlagerung der von der Basisstation 1 ausgesandten Nutzsignale für die einzelnen Kommunikationsteilnehmer stellen die Nutzsignale eines Kommunikationsteilnehmers für die Nutzsignale der jeweils übrigen Kommunikationsteilnehmer ein Störsignal dar.

Im folgenden wird gemäß der Figur das Mobiltelefon 5 stellvertretend für die Kommunikationsteilnehmer in der von der Basisstation 1 aufgespannten Funkzelle betrachtet. Um eine bestimmte Qualität für die Übertragung des dem Mobiltelefon 5 zugeordneten Nutzsignals zu garantieren, darf das Verhältnis der Leistung dieses Nutzsignals zur Leistung aller übrigen Nutzsignale, die für andere Kommunikationsteilnehmer bestimmt sind und das dem Mobiltelefon 5 zugeordnete Nutzsignal potentiell stören können, am Empfängereingang des Mobiltelefons 5 einen vorgegebenen Zielwert $SIR_Z$ (Signal to Interference Ratio) nicht unterschreiten. Gleichzeitig soll dieser vorgegebene Zielwert $SIR_Z$ auch nicht überschritten werden, da sonst die Nutzsignale der übrigen Kommunikationsteilnehmer mehr als unbedingt nötig gestört werden. Der vorgegebene Zielwert $SIR_Z$ stellt dabei ein vorgegebenes Signal/Interferenz-Verhältnis zwischen dem Pegel des gewünschten Nutzsignals und dem durch die Nutzsignale für die übrigen Komunikationsteilnehmer erzeugten Interferenzpegel dar.

Zur Erzielung des vorgegebenen Zielwertes $SIR_Z$ für das Signal/Interferenz-Verhältnis ist eine Leistungsregelung mit geschlossener Regelschleife vorgesehen. In der Downlink-Verbindung von der Basisstation 1 zum Mobiltelefon 5 wird dabei am Mobiltelefon 5 ein Schätzwert $SIR_S$ für das Signal/Interferenz-Verhältnis ermittelt und mit dem vorgegebenen Zielwert $SIR_Z$ verglichen. In Abhängigkeit des Vergleichsergebnisses kann dann das Mobiltelefon 5 in der gemäß der Veröffentlichung "Technical Specification", 3 GPP RAN 25.214 V 1.3.1 beschriebenen Weise Signalisierungssignale, beispielsweise in Form der beschriebenen TPC-Befehle (Transmit Power Control), erzeugen und in der Uplink-Verbindung zur Basisstation 1 senden, um die Sendeleistung der Basisstation 1 für die Abstrahlung von Signalen an das Mobiltelefon 5 so anzupassen, daß der Schätzwert $SIR_S$ für das Signal/Interferenz-Verhältnis an den vorgegebenen Zielwert $SIR_Z$ angepaßt wird.

Die Ermittlung des Schätzwertes $SIR_S$ für das Signal/Interferenz-Verhältnis setzt bislang die Kenntnis eines Teils der gesendeten Daten voraus. Neben den eigentlichen Daten werden dabei auch dem hier als Mobiltelefon 5 ausgebildeten Empfänger bekannte Pilotsequenzen übertragen. Diese können insbesondere auch zur Kanalentzerrung im Empfänger eingesetzt werden und werden bislang zur Ermittlung des Schätzwertes $SIR_S$ für das Signal/Interferenz-Verhältnis verwendet.

Gemäß der Erfindung umfaßt nun das Mobiltelefon 5 ein Matched-Filter 55 dem die von der Basisstation 1 gesendeten Signale über den ersten Übertragungskanal 45 zugesandt werden und das an die senderseitig durchgeführte Impulsformung angepaßt ist. Ein Ausgang des Matched-Filters 55 ist auf einen Datendemodulator 60 geführt. Der Ausgang des Matched-Filters 55 ist außerdem auf erste Vergleichsmittel 15 geführt. Weiterhin ist der Ausgang des Matched-Filters 55 auf eine Entspreizvorrichtung 30 geführt. Der Datendemodulator 60 dient dazu, die vom Matched-Filter 55 in der beschriebenen Weise aufbereiteten Empfangssignale zu demodulieren und weiterführenden, in der Figur nicht dargestellten Schaltungen des Mobiltelefons 5 zuzuführen, in denen die in den empfangenen Signalen enthaltenen Daten, die für das Mobiltelefon 5 bestimmt sind, extrahiert und weiterverarbeitet werden.

Der Entspreizvorrichtung 30 ist außerdem der dem Mobiltelefon 5 zugeordnete Code 70 zugeführt. Ein Ausgang der Entspreizvorrichtung 30 ist einem Datendetektor 35 zugeführt, dessen Ausgang wiederum einer Spreizvorrichtung 40 zugeführt ist. Der Spreizvorrichtung 40 ist außerdem ebenfalls der dem Mobiltelefon 5 zugeordnete Code 70 zugeführt. Ein Ausgang der Spreizvorrichtung 40 ist wie auch der Ausgang des Matched-Filters 55 den ersten Vergleichsmitteln 15 zugeführt, deren Ausgang zweiten Vergleichsmitteln 20 zugeführt ist. Den zweiten Vergleichsmitteln 20 ist dabei außerdem der vorgegebene Zielwert $SIR_Z$ zugeführt und in der Figur mit dem Bezugszeichen 65 gekennzeichnet. Ein Ausgang der zweiten Vergleichsmittel 20 ist Sendemitteln 25 zugeführt, deren Ausgang über den zweiten Übertragungskanal 50 mit der Basisstation 1 verbunden ist. Die Kommunikation zwischen der Basisstation 1 und dem Mobiltelefon 5 erfolgt dabei über entsprechende Funksignale. Die Entspreizvorrichtung 30, der Datendetektor 35 und die Spreizvorrichtung 40 stellen Mittel 10 zur Ableitung eines.Referenzsignals aus dem über das Matched-Filter 55 von der Basisstation 1 empfangenen Signal dar. Das Matched-Filter 55, der Datendemodulator 60, die ersten Vergleichsmittel 15, die Entspreizvorrichtung 30, der Datendetektor 35, die Spreizvorrichtung 40, die zweiten Vergleichsmittel 20 und die Sendemittel 25 sind in dem hier beschriebenen Beispiel Bestandteile des Mobiltelefons 5. Der Code 70 und der vorgegebene Zielwert $SIR_Z$ können jeweils in einem oder mehreren Speichern des Mobiltelefons 5 abgelegt sein.

Die Basisstation 1, der erste Übertragungskanal 45, das Matched-Filter 55, die Mittel 10 zur Ableitung eines Referenzsignals, die ersten Vergleichsmittel 15, die zweiten Vergleichsmittel 20, die Sendemittel 25 und der zweite Übertragungskanal 50 bilden eine geschlossene Regelschleife 75 für die Regelung der Sendeleistung der Basisstation 1 für die Abstrahlung von Signalen an das Mobiltelefon 5. Das am Mobiltelefon 5 von der Basisstation 1 empfangene Signal besteht aus der zeitlichen und spektralen Überlagerung verschiedener Nutzsignale für verschiedene Kommunikationsteilnehmer, wobei diese Nutzsignale vor Versendung durch die Basisstation 1 mit unterschiedlichen und zueinander orthogonalen Codes gespreizt wurden.

Bei einer idealen Übertragung der verschiedenen gemultiplexten Nutzsignale von der Basisstation 1 zum Mobiltelefon 5, bei der Rauscheinflüsse nicht berücksichtigt werden müssen, lassen sich die dem Mobiltelefon 5 zugeordneten Nutzsignale mittels dem dem Mobiltelefon 5 zugeordneten Code interferenzfrei von den empfangenen Nutzsignalen extrahieren, obwohl das vom Mobiltelefon 5 empfangene Signal aufgrund der zeitlichen und spektralen Überlagerung der einzelnen Nutzsignale sogenannte Mehrfachnutzerinterferenzen (MAI) aufweist. Dies liegt daran, daß die Orthogonalität der Codes bei einer solchen idealen Übertragung nicht verlorengeht und auch beim empfangenden Mobiltelefon 5 noch vorliegt. Wird das Ausgangssignal des Matched-Filters 55 durch die Entspreizvorrichtung 30 mittels des dem Mobiltelefon 5 zugeordneten Codes 70 entspreizt, so ergibt sich am Ausgang der Entspreizvorrichtung 30 das dem Mobiltelefon 5 zugeordnete Nutzsignal ohne Interferenz.

In der Regel ist jedoch der erste Übertragungskanal 45 nicht ideal, d.h. sowohl Rauscheinflüsse müssen berücksichtigt werden und die Orthogonalität der einzelnen Nutzsignale wird reduziert. Als Interferenz soll im folgenden die Summe aus dem Rauschanteil und der MAI bezeichnet werden. Durch die Entspreizvorrichtung 30 läßt sich in diesem Fall dann nur der Anteil der Interferenz eliminieren, der auf der orthogonalen Codierung der Nutzersignale basiert, nicht jedoch der rauschbehaftete Interferenzanteil. Das durch die Entspreizvorrichtung 30 aus dem am Mobiltelefon 5 empfangenen Signal extrahierte Signal stellt somit ein mehr oder weniger interferenzbehaftetes dem Mobiltelefon 5 zugeordnetes Nutzsignal dar. Für den idealen Fall ohne Rauschen und Beihaltung der Orthogonalität im ersten Übertragungskanal 45 könnte das Ausgangssignal der Entspreizvorrichtung 30 direkt als Referenzsignal zur Ermittlung des Schätzwertes $SIR_S$ des Signal/Interferenzverhältnisses herangezogen werden, da es nicht interferenzbehaftet ist. Da das durch die Entspreizvorrichtung extrahierte Nutzsignal jedoch in der Regel durch Rauschen im ersten Übertragungskanal 45 interferenzbehaftet ist, ist eine weitere Aufbereitung durch den Datendetektor 35 erforderlich, um den Einfluß des Rauschens zu reduzieren. Durch den Datendetektor 35 sollen die ursprünglich gesendeten Daten des Nutzsignals wieder hergestellt werden. Die Signale werden von der Basisstation 1 zum Mobiltelefon 5 in der Regel moduliert übertragen, wobei im folgenden als Beispiel angenommen sein soll, daß als Modulationsverfahren das QPSK-Verfahren (Quadrature Phase Shift Keying) Anwendung findet, wie es beispielsweise bei einem UMTS-Mobilfunksystem der Fall ist. Beim QPSK-Verfahren werden sogenannte Signalvektoren $S_i$ im Basisband gebildet, die folgende vier Werte annehmen können: $S_i$

$\in \{(+1, +1)(-1, +1), (+1, -1), (-1, -1)\}$. Diese Signalvektoren $S_i$ werden vor ihrer Übertragung zum Mobiltelefon 5 in der Basisstation 1 gebildet. Nach der in der Regel rauschbehafteten Übertragung und ihrem Empfang im Mobiltelefon 5 können die Signalvektoren $S_i$ beliebig in einem zweidimensionalen Signalraum liegen. Die Rückgewinnung der ursprünglichen Signalvektoren $S_i$ erfolgt dann durch den Datendetektor 35 dadurch, daß der Signalraum in vier Quadranten eingeteilt wird. Die Signalvektoren liegen nach der Übertragung jeweils mit einem beliebigen Winkel $\varphi_i$ in diesem zweidimensionalen Signalraum. Die Datendetektion erfolgt dann einfach dadurch, daß dem jeweiligen Winkel $\varphi_i$ des jeweiligen Signalvektors nach der Übertragung genau einer von vier möglichen geschätzten Signalvektoren $\hat{S}_i$ zugewiesen wird:

$$0 <= \varphi_i < \pi/2 \Rightarrow \hat{S}_i = (+1, +1)$$

$$\pi/2 \leq \varphi_i < \pi \Rightarrow \hat{S}_i = (-1, +1)$$

$$\pi \leq \varphi_i < 3/2\pi \Rightarrow \hat{S}_i = (-1, -1)$$

$$3/2\pi \leq \varphi_i < 2\pi \Rightarrow \hat{S}_i = (+1, -1).$$

Diese geschätzten Signalvektoren $\hat{S}_i$ werden in einem dritten Schritt durch die Spreizvorrichtung 40 wieder mit dem dem Mobiltelefon 5 zugeordneten Code 70 gespreizt und dienen anschließend als Schätzung der für das Mobiltelefon 5 gesendeten Nutzdaten und somit als Referenzsignal für die Ermittlung des Schätzwertes $SIR_S$ des Signal/Interferenz-Verhältnisses. Dieser Schätzwert $SIR_S$ wird dabei durch die ersten Vergleichsmittel 15 durch Vergleich des Ausgangssignals des Matched-Filters 55 mit dem durch die Mittel 10 zur Ableitung des Referenzsignals gebildeten Referenzsignal ermittelt. Für diesen Vergleich existieren bereits dem Fachmann bekannte Algorithmen, die beispielsweise der Veröffentlichung "Simulation of Communication Systems" Jerochim et al., Plenum Press, New York, 1992 zu entnehmen sind und hier nicht weiter ausgeführt werden, da sie für die Beschreibung der Erfindung nicht erforderlich sind.

Der durch die ersten Vergleichsmittel 15 ermittelte Schätzwert $SIR_S$ des Signal/Interferenz-Verhältnisses wird durch die zweiten Vergleichsmittel 20 mit dem vorgegebenen Zielwert $SIR_Z$ verglichen. Die zweiten Vergleichsmittel 20 können dann aus diesem Vergleich in der aus der Veröffentlichung "Technical Specification", 3 GPP RAN 25.214 V 1.3.1 bekannten und oben beschriebenen Weise die TPC-Befehle ableiten und über die Sendemittel 25 und den zweiten Übertragungskanal 50 an die Basisstation 1 zur entsprechenden Anpassung der Sendeleistung der Basisstation 1 für die an das Mobiltelefon 5 zu sendenden Signale übertragen.

Für die Ermittlung des Schätzwertes $SIR_S$ des Signal/Interferenz-Verhältnisses sind gemäß der Erfindung keine von der Basisstation 1 zum Mobiltelefon 5 zu übertragenden bekannten Pilotsequenzen erforderlich. Auf solche Pilotsequenzen kann ganz verzichtet werden, wenn die zu sendenden Signale in der Basisstation 1 einer Vorverzerrung, beispielsweise durch Verwendung eines Joint-Predistortion-Verfahrens, unterzogen werden. In diesem Fall kann im Mobiltelefon 5 auf eine aufwendige Entzerrung der empfangenen Signale verzichtet und beispielsweise eine einfache Korrelationsentzerrung angewendet werden. Durch die Vorverzerrung in der Basisstation 1 werden Intersymbolinterferenzen (ISI), die durch Mehrwegeempfang der über den ersten Übertragungskanal 45 übertragenen Signale entstehen, eliminiert. Da durch die Entspreizvorrichtung 30 Interferenzen zwischen verschiedenen Nutzsignalen nicht entfernt werden können, führt eine Vorverzerrung der zu sendenden Signale in der Basisstation 1 zu einem Referenzsignal, das weniger interferenzbehaftet ist und somit zu einer besseren Schätzung des Signal/Interferenz-Verhältnisses durch die ersten Vergleichsmitcel 15 führt. Die Schätzung ist dabei umso besser, je weniger Übertragungsfehler auf dem ersten Übertragungskanal 45 auftreten. Dabei ist eine Bitfehlerrate von $10^{-2}$ bei einer Übertragung ohne Fehlercodierung für die Genauigkeit der Schätzung des Signal/Interferenz-Verhältnisses ausreichend.

Wird in der Basisstation 1 keine Vorverzerrung durchgeführt, so sollte der Einfluß der Interferenzen des im Mobiltelefon 5 von der Basisstation 1 empfangenen Signals mit Hilfe eines aufwendigeren Entzerrers reduziert werden, beispielsweise durch Verwendung eines RAKE-Entzerrers oder eines Joint-Detection-Verfahrens. Diese Entzerrung sollte dabei im Anschluß an das Matched-Filter 55 erfolgen, wobei dann die entzerrten Signale dem Datendemodulator 60, den ersten Vergleichsmitteln 15 und der Entspreizvorrichtung 30 zuzuführen sind. Auch auf diese Weise kann der Einfluß der Intersymbolinterferenzen auf das durch die Mittel 10 zur Ableitung gebildete Referenzsignal sowie auf das am Mobiltelefon 5 empfangene Signal reduziert werden.

Unterschreitet das geschätzte Signal/Interferenz-Verhältnis den vorgegebenen Zielwert $SIR_Z$, so ist die Sendeleistung der Basisstation 1 für die Abstrahlung des dem Mobiltelefon 5 zugeordneten Nutzsignals zu erhöhen. Überschreitet das geschätzte Signal/Interferenz-Verhältnis den vorgegebenen Zielwert $SIR_Z$, so ist die Sendeleistung der Basisstation 1 zur Abstrahlung des dem Mobiltelefon 5 zugeordneten Nutzsignals entsprechend zu senken.

**Patentansprüche**

**1.** Verfahren zur Regelung der Sendeleistung einer Sendestation (1) in einem Übertragungssystem in Abhängigkeit einer Schätzung des Signal/Interferenz-Verhältnisses in einer Empfangsstation (5), wobei in dem Übertragungssystem, insbesondere einem CDMA-Übertragungssystem (Code Division Multiple Access), unterschiedlichen Kommunikationsteilnehmem zugeordnete Nutzsignale durch orthogonale Codes getrennt werden und wobei aus einem zumindest von der Sendestation (1) in der Empfangsstation (5) empfangenen Signal mittels eines der Codes ein einem Kommunikationsteilnehmer zugeordnetes Nutzsignal abgeleitet wird, **dadurch gekennzeichnet, dass** dieses Nutzsignal als Referenzsignal mit dem empfangenen Signal verglichen wird, um das Signal/Interferenz-Verhältnis zu schätzen.

2. Verfahren nach Anspruch 1, **dadurch gekennzeichnet, dass** das empfangene Signal mit dem ausgewählten Code entspreizt wird, dass das so entspreizte Signal einer Datendetektion unterzogen wird und dass das so detektierte Signal mit dem ausgewählten Code erneut gespreizt wird, um das Referenzsignal zu bilden.

3. Verfahren nach Anspruch 1 oder 2, **dadurch gekennzeichnet, dass** das zumindest von der Sendestation (1) an die Empfangsstation (5) zu übertragende Signal in der Sendestation (1), insbesondere mittels eines Joint Predistortion (JP) Verfahren vorverzerrt wird.

4. Verfahren nach Anspruch 1, 2 oder 3, **dadurch gekennzeichnet, dass** das zumindest von der Sendestation (1) an die Empfangsstation (5) zu übertragende Signal mittels eines QPSK-Verfahrens (Quadrature Phase Shift Keying) moduliert wird.

5. Empfangsstation (5) zur Durchführung eines Verfahrens nach einem der vorherigen Ansprüche, wobei die Empfangsstation (5) Mittel zum Empfang von Signalen zumindest einer Sendestation (1) in einem Übertragungssystem, insbesondere einem CDMA-Übertragungssystem, umfasst, wobei unterschiedlichen Kommunikationsteilnehmem zugeordnete Nutzsignale durch orthogonale Codes voneinander getrennt sind und wobei die Empfangsstation (5) Mittel (10) zur Ableitung eines einem Kommunikationsteilnehmer zugeordneten Nutzsignals mittels eines der Codes umfasst, **dadurch gekennzeichnet, dass** das abgeleitete Nutzsignal ein Referenzsignal bildet, dass die Empfangsstation (5) erste Vergleichsmittel (15) zum Vergleich des Referenzsignals mit dem empfangenen Signal umfasst, um das Signal/Interferenz-Verhältnis zu schätzen, dass die Empfangsstation (5) zweite Vergleichsmittel (20) zum Vergleich des geschätzten Signal/Interferenz-Verhältnisses mit einem vorgegebenen Signal/Interferenz-Verhältnis umfasst und dass die Empfangsstation (5) Sendemittel (25) umfasst, die in Abhängigkeit des durch die zweiten Vergleichsmittel (20) ermittelten Vergleichsergebnisses ein Signal an die Sendestation (1) abgibt, um die Sendeleistung der Sendestation (1) so anzusteuern, dass das geschätzte Signal/Interferenz-Verhältnis dem vorgegebenen Signal/Interferenz-Verhältnis angenähert wird.

6. Empfangsstation (5) nach Anspruch 5, **dadurch gekennzeichnet, dass** die Mittel (10) zur Ableitung eine Entspreizvorrichtung (30) umfassen, der das empfangene Signal mit dem ausgewählten Code entspreizt, dass die Mittel (10) zur Ableitung einen Datendetektor (35) umfassen, der das entspreizte Signal einer Datendetektion unterzieht, und dass die Mittel (10) zur Ableitung eine Spreizvorrichtung (40) umfassen, die das detektierte Signal mit dem ausgewählten Code erneut spreizt, um das Referenzsignal zu bilden.

7. Empfangsstation (5) nach Anspruch 5 oder 6, **dadurch gekennzeichnet, dass** die Empfangsstation (5) als Basisstation eines Mobilfunknetzes ausgebildet ist.

8. Empfangsstation (5) nach Anspruch 5 oder 6, **dadurch gekennzeichnet, dass** die Empfangsstation (5) als mobiles Endgerät, insbesondere als Mobiltelefon, ausgebildet ist.

## Claims

1. Method for controlling the transmission power of a transmitting station (1) in a transmission system as a function of an estimate of the signal-to-interference ratio in a receiving station (5), with payload signals which are associated with different communication subscribers being separated by means of orthogonal codes in the transmission system, in particular a CDMA transmission system (Code Division Multiple Access), and with a payload signal which is associated with a communication subscriber being derived by means of one of the codes from a signal which is received at least from the transmitting station (1) in the receiving station (5), **characterized in that** this payload signal is compared as a reference signal with the received signal, in order to estimate the signal-to-interference ratio.

2. Method according to Claim 1, **characterized in that** the received signal is despread using the selected code, **in that** the signal which has been despread in this way is subjected to data detection, and **in that** the signal detected in this way is spread once again using the selected code, in order to form the reference signal.

**3.** Method according to Claim 1 or 2, **characterized in that** the signal to be transmitted at least from the transmitting station (1) to the receiving station (5) is predistorted in the transmitting station (1), in particular by means of a Joint Predistortion (JP) method.

**4.** Method according to Claim 1, 2 or 3, **characterized in that** the signal to be transmitted at least from the transmitting station (1) to the receiving station (5) is modulated by means of a QPSK method (Quadrature Phase Shift Keying).

**5.** Receiving station (5) for carrying out a method according to one of the preceding claims, with the receiving station (5) having means for reception of signals from at least one transmitting station (1) in a transmission system, in particular a CDMA transmission system, with payload signals which are associated with different communication subscribers being separated from one another by orthogonal codes, and with the receiving station (5) having means (10) for derivation of a payload signal, which is associated with one communication subscriber, by means of one of the codes, **characterized in that** the derived payload signal forms a reference signal, **in that** the receiving station (5) has first comparison means (15) for comparison of the reference signal with the received signal, in order to estimate the signal-to-interference ratio, **in that** the receiving station (5) has second comparison means (20) for comparison of the estimated signal-to-interference ratio with a predetermined signal-to-interference ratio, and **in that** the receiving station (5) has transmitting- means (25) which emit a signal to the transmitting station (1) as a function of the comparison result as determined by the second comparison means (20), in order to control the transmission power of the transmitting station (1) such that the estimated signal-to-interference ratio becomes closer to the predetermined signal-to-interference ratio.

**6.** Receiving station (5) according to Claim 5, **characterized in that** the means (10) for derivation have a despreading apparatus (30), which despreads the received signal using the selected code, **in that** the means (10) for derivation have a data detector (35) which subjects the despread signal to data detection, and **in that** the means (10) for derivation have a spreading device (40) which spreads the detected signal once again using the selected code in order to form the reference signal.

**7.** Receiving station (5) according to Claim 5 or 6, **characterized in that** the receiving station (5) is in the form of a base station in a mobile radio network.

**8.** Receiving station (5) according to Claim 5 or 6, **characterized in that** the receiving station (5) is in the form of a mobile terminal, in particular a mobile telephone.

## Revendications

**1.** Procédé de régulation de la puissance d'émission d'une station d'émission (1) dans un système de transmission en fonction d'une estimation du rapport signal/interférence dans une station de réception (5), selon lequel, dans le système de transmission, en particulier un système de transmission CDMA (accès multiple par différence de code), des signaux utiles associés à différents participants à la communication sont séparés par des codes orthogonaux et, à partir d'un signal reçu au moins de la station d'émission (1) dans la station de réception (5), un signal utile associé, à un participant à la communication est dérivé au moyen de l'un des codes, **caractérisé en ce que** ce signal utile est comparé, en tant que signal de référence, avec le signal reçu de façon à évaluer le rapport signal/interférence.

**2.** Procédé selon la revendication 1, **caractérisé en ce que** le signal reçu est comprimé au moyen du code choisi, de sorte que le signal ainsi comprimé est soumis à une détection des données et que le signal ainsi détecté est à nouveau décomprimé au moyen du code choisi, afin de former le signal de référence.

**3.** Procédé selon la revendication 1 ou 2, **caractérisé en ce que** le signal à transmettre au moins de la station d'émission (1) à la station de réception (5) est préalablement affecté de distorsion, en particulier au moyen d'un procédé de distorsion préalable conjointe (JP).

**4.** Procédé selon la revendication 1, 2 ou 3, **caractérisé en ce que** le signal à transmettre au moins de la station d'émission (1) à la station de réception (5) est modulé au moyen d'un procédé de modulation par déplacement quadratique de phase.

**5.** Station de réception (5) pour la réalisation d'un procédé selon l'une quelconque des revendications précédentes, comprenant des moyens de réception de signaux au moins d'une station d'émission (1) dans un système de transmission, en particulier un système de transmission CDMA dont des signaux utiles associés à différents participants à la communication sont séparés les uns des autres par des codes orthogonaux, et des moyens (10) pour dériver au moyen d'un code un signal utile associé à un participant à la communication,
**caractérisée en ce que**
le signal utile dérivé forme un signal de référence, la station de réception (5) comprend des premiers moyens de comparaison (15) pour la comparaison du signal de référence avec le signal reçu, de façon à estimer le rapport signal/interférence, la station de réception (5) comprend des deuxièmes moyens de comparaison (20) pour la comparaison du rapport signal/interférence estimé avec un rapport signal/interférence prédéterminé, et la station de réception (5) comprend des moyens d'émission (25) qui émettent, en fonction du résultat de la comparaison obtenu par les deuxièmes moyens de comparaison (20), un signal à la station d'émission (1) afin de commander la puissance d'émission de la station d'émission (1) de manière que le rapport signal/interférence estimé se rapproche du rapport signal/interférence prédéterminé.

6. Station de réception (5) selon la revendication 5
**caractérisée en ce que**
les moyens (10) de dérivation comprennent un dispositif de compression (30) qui comprime le signal reçu au moyen du code choisi, les moyens (10) de dérivation comprennent un détecteur de données (35) qui soumet le signal resserré à une détection de données et les moyens (10) de dérivation comprennent un dispositif de décompression (40) qui décomprime à nouveau, au moyen du code choisi, le signal détecté afin de former le signal de référence.

7. Station de réception (5) selon la revendication 5 ou 6,
**caractérisée en ce que**
la station de réception (5) est une station de base d'un réseau de radiotéléphonie mobile.

8. Station de réception (5) selon la revendication 5 ou 6
**caractérisée en ce que**
la station de réception (5) est un terminal mobile, en particulier un téléphone mobile.

15

40

70

20

65

35

10

70

60

30

5

55

25

45

50

1

75